# EUROPÄISCHE PATENTSCHRIFT

(11) **EP 1 604 130 B1**
(45) Veröffentlichungstag und Bekanntmachung des Hinweises auf die Patenterteilung: **26.11.2008**
(21) Anmeldenummer: 04712008.4
(22) Anmeldetag: 18.02.2004
(51) Int. Cl.: F16H 7/08

(54) **ZUGMITTELTRIEB**
POWER TRANSMISSION BELT DRIVE
ENTRAINEMENT PAR MECANISME DE TRACTION

(30) Priorität: 20.03.2003 DE 10312514
(43) Veröffentlichungstag der Anmeldung: 14.12.2005
(73) Patentinhaber: Schaeffler KG, 91074 Herzogenaurach (DE)
(72) Erfinder: BOGNER, Michael, 90542 Eckental (DE)
(86) Internationale Anmeldenummer: PCT/EP2004/001505
(87) Internationale Veröffentlichungsnummer: WO 2004/083681

(56) Entgegenhaltungen:
- DE-U- 6 804 829
- FR-A- 1 175 059
- US-A- 4 530 682
- US-A- 5 410 923
- US-A- 5 782 709
- US-A- 6 036 612

## Beschreibung

### Gebiet der Erfindung

Die Erfindung bezieht sich auf einen Zugmitteltrieb mit den Merkmalen der oberbegriffe von Anspruch 1 bzw. 2, wie sie aus der US-A-4530682 bzw. der DE-U-6804829 bekannt sind.

### Hintergrund der Erfindung

Zugmitteltriebe dieser Bauart werden an Brennkraftmaschinen zum Antrieb von Aggregaten, wie beispielsweise Wasserpumpe, Lenkhilfspumpe, Klimakompressor oder Generator vorgesehen. Als Zugmittel für diese Zugmitteltriebe, die auch als Aggregatetrieb zu bezeichnen sind, ist ein als Endlosriemen ausgebildetes Zugmittel vorgesehen. Für die Funktion der anzutreibenden Aggregate sowie zur Erzielung einer hohen Lebensdauer des Zugmittels ist ein möglichst schlupffreier Antrieb erforderlich. Dieses Ziel kann durch eine ausreichende Vorspannung des Zugmittels erreicht werden, beispielsweise mittels einer Spannvorrichtung, bei der eine Laufrolle kraftbeaufschlagt an dem Zugmittel geführt ist. Als Spannvorrichtungen sind sowohl mechanische als auch hydraulische wirkende Spannsysteme bekannt.

Aus der DE 68 04 829 U ist ein Aggregatetrieb für eine Brennkraftmaschine bekannt. Zur Erzielung einer ausreichenden Vorspannung des Zugmittels ist dabei ein Generator der Brennkraftmaschine schwenkbar angeordnet und beabstandet zu der Drehachse mittels einer Gewindestange abgestützt. Eine Beeinflussung der Vorspannkraft erfolgt mittels einer Spiralfeder, die einer Gewindehülse zugeordnet ist, in die Gewindestangen mit einem Links- und einem Rechtsgewinde eingesetzt sind. Nach Montage des Zugmittels wird zunächst die Hülse soweit verdreht, bis sich eine ausreichende Vorspannung des Zugmittels einstellt, bevor die vorgespannte Spiralfeder der Hülse zugeordnet wird. In der Betriebsstellung bewirkt die vorgespannte Spiralfeder bei einer Längung des Zugmittels eine selbsttätige Verdrehung der Hülse, verbunden mit einem Verschwenken des Generators, wodurch das Zugmittel nachgespannt wird.

Die bekannte Vorrichtung beschränkt sich damit ausschließlich auf eine Kompensation einer Zugmittellängung und ermöglicht keine elastische Spannvorrichtung, die sich beispielsweise positiv auf das Geräuschniveau des Zugmitteltriebs auswirkt. Weiterhin erfordert die bekannte Vorrichtung eine aufwendige Montage insbesondere Einstellung, verbunden mit einem großen Einbauraum.

### Zusammenfassung der Erfindung

Die Nachteile der bekannten Vorrichtung beachtend, liegt der vorliegenden Erfindung die Aufgabe zu Grunde, einen Zugmitteltrieb zu realisieren dessen Spannsystem bzw. Spannvorrichtung eine einfache Montage des Zugmittels ermöglicht.

Diese Aufgabe wird insbesondere durch die in den Ansprüchen 1 und 2 aufgeführten Merkmale gelöst.

Gemäß Anspruch 1 ist die um einen Drehpunkt schwenkbar angeordnete Spannvorrichtung mit einer Laufrolle an dem Zugmittel geführt. Die Spannvorrichtung ist dabei über ein Federmittel an einem ebenfalls schwenkbaren Stellhebel abgestützt. Der um einen Fixierpunkt verdrehbare Stellhebel ist dabei gegenüber dem Drehpunkt der Spannvorrichtung lagepositioniert. Die Gestaltung des Stellhebels sieht vor, dass dieser zwischen zwei Endlagen, von einer Montageposition in eine Betriebsposition verschwenkbar ist, zur Erzielung einer ausreichenden Vorspannkraft des Zugmittels

Die Erfindung gemäß Anspruch 2 schließt als Spannvorrichtung ein verschwenkbares Antriebsorgan, ein Aggregat der Brennkraftmaschine ein, das über ein eine Vorspannkraft des Zugmittels beeinflussendes Federmittel abgestützt ist. Dabei ist dem Federmittel ein Stellhebel zugeordnet, der um einen zu dem Drehpunkt des Aggregates lagepositionierten Fixierpunkt zwischen zwei Endlagen schwenkbar ist. Der Stellhebel ist dabei ebenfalls von einer Montageposition in eine Betriebsposition schwenkbar, zur Erzielung einer ausreichenden Vorspannung des Zugmittels.

Der Schwenkhebel gemäß der Erfindungen stellt eine einfache Maßnahme dar, die Montage des Zugmittels zu vereinfachen, verbunden mit einem Kostenvorteil. Die Montageposition des Stellhebels ist so gewählt, daß sich dadurch die Spannvorrichtung bzw. das Aggregat soweit verschwenkt, daß der Riemen ohne Zusatzwerkzeuge auf alle Laufscheiben des Zugmitteltriebs aufgelegt werden kann. In gleicher Weise wird auch ein Austausch des Zugmittels vereinfacht, in dem der Stellhebel von der Betriebsposition in die Montageposition geschwenkt wird.

Nach der Erfindung gemäß den Ansprüchen 1 und 2 weist der Stellhebel zwei zueinander abgewinkelte Abstützflächen auf, die mit Kontaktflächen korrespondieren, die beispielsweise an einem Kurbelgehäuse der Verbrennungskraftmaschine vorgesehen, definierte Endlagen des Stellhebels gewährleisten.

Weitere vorteilhafte Ausgestaltungen der Erfindungen sind Gegenstand der abhängigen Ansprüche 3 bis 13.

Die Handhabung des Stellhebels vereinfachend, weist dieser ein Mehrkantprofil für ein Werkzeug auf. Damit kann der um den Fixierpunkt verschwenkbare Stellhebel problemlos zwischen den Endlagen verstellt werden.

Zur Schaffung stabiler Endlagen des Stellhebels ist dieser so gestaltet, dass sich zwischen dem Fixierpunkt des Stellhebels und dem Anlenkpunkt des Federmittels, unabhängig von der Endlage jeweils ein axialer Versatz "s" einstellt.

Dieser axiale Versatz in Verbindung mit der durch das Federmittel kraftschlüssig vorgespannten Lage des Stellhebels an den Abstützflächen, bewirkt eine dauerhafte, stabile Endlage des Stellhebels, insbesondere in der Betriebsposition. Zur Fixierung des Stellhebels in der Betriebsposition schließt die Erfindung außerdem eine Sicherungsschraube ein, mit dem der Stellhebel beispielsweise an dem Gehäuse verdrehgesichert ist.

Eine bevorzugte Ausgestaltung der Erfindung gemäß Anspruch 1 umfasst eine Spannvorrichtung, die einen um einen Drehpunkt schwenkbaren Tragkörper einschließt, an dem die drehbare, dem Zugmittel zugeordnete Laufscheibe positioniert ist. Vorteilhaft ist dazu der Tragkörper als ein dreieckförmig gestalteter Kniehebel ausgebildet. Jedem Eckpunkt des dreieckförmigen Kniehebels ist vorzugsweise eines der Bauteile, wie die Laufscheibe, das Federmittel oder die Drehachse der Spannvorrichtung zugeordnet. Konstruktive Maßnahmen, die sich auf die Gestaltung des Tragkörpers bzw. des Kniehebels beziehen, wie beispielsweise der Abstand zwischen dem Drehpunkt und dem Anlenkpunkt des Federmittels bzw. der Drehachse der Laufscheibe sowie eine Winkelanordnung von dem Drehpunkt des Tragkörpers ausgehend zu den jeweiligen Anlenkpunkten, nehmen unmittelbar Einfluß auf den Schwenkbereich der Laufscheibe zwischen den Endlagen des Stellhebels. Diese Maßnahmen sind einsetzbar, um die Montage des Zugmittels zu beeinflussen.

Als Auslegungskriterium für einen definierten Verstellbereich des Stellhebels ist ein Neigungswinkel "α" bzw. "β" vorgesehen, der sich zwischen einer Längsachse "x" des Stellhebels und dem Verlauf der Abstützflächen des Stellhebels einstellt. Als Neigungswinkel "α" bzw. "β" ist bevorzugt ein Winkelmaß < 90° vorgesehen.

Die Erfindung gemäß Anspruch 2 ermöglicht die Anwendung eines schwenkbar angeordneten Startergenerators, der gleichzeitig die Funktion der Spannvorrichtung für das Zugmittel übernimmt. Startergeneratoren eignen sich bevorzugt für kleinvolumige Verbrennungskraftmaschinen, da dieses Aggregat die Funktion eines Generator und eines Starter zusammengefasst. Startergeneratoren bewirken eine Bauteil- und Bauraumoptimierung, wobei ein schwenkbar angeordneter Startergenerator zusätzlich die Zugmittelmontage verbessert, und eine Beschädigung des Zugmittels bei der Montage verhindert, mit einem positiven Effekt auf die Lebensdauer des Zugmittels. Abhängig von dem Betreibsmodus übernimmt der Startergenerator die Funktion eines Abtriebsorgans (Startmodus) oder eines Antriebsorgans (Betriebsmodus).

Als Federmittel bietet es sich an, eine Feder-Dämpfungseinheit vorzusehen, die insbesondere die Stellbewegungen des schwenkbaren Aggregates bzw. der Spannvorrichtung dämpft und sich damit positiv auf die Geräuschentwicklung des Zugmitteltriebs auswirkt.

Alternativ eignet sich weiterhin ein hydraulisch wirkendes, ein Hydraulikelement aufweisendes Federmittel, das insbesondere für ein erfindungsgemäß schwenkbar gegen ein Federmittel abgestütztes Aggregat eingesetzt werden kann.

### Kurze Beschreibung der Zeichnungen

Bevorzugte Ausführungsbeispiele, abgebildet in drei Figuren, verdeutlichen die Erfindungen. Es zeigen:
- Figur 1: eine erfindungsgemäße Spannvorrichtung in einer Montageposition;
- Figur 2: die Spannvorrichtung gemäß Figur 1 in der Betriebspositi- on;
- Figur 3: einen Zugmitteltrieb der ein schwenkbares als Spannvor- richtung dienenden Aggregat umfasst, in einer Montagepo- stionierung;
- Figur 4: den Zugmitteltrieb gemäß Figur 3 in der Betriebsposition.

### Detaillierte Beschreibung der Zeichnungen

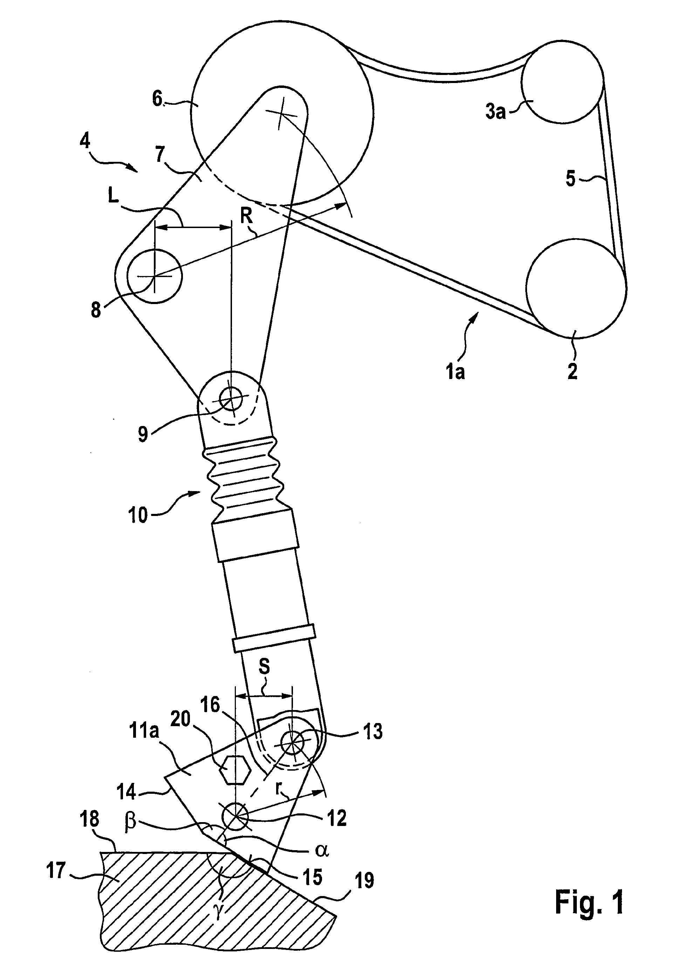

In Figur 1 ist ein Zugmitteltrieb 1a beispielsweise einer Verbrennungskraftmaschine abgebildet. Der Zugmitteltrieb 1a ist zum Antrieb einzelner Aggregate, wie beispielsweise einem Generator, einem Klimakompressor oder einer Lenkhilfpumpe vorgesehen, wobei das in Figur 1 abgebildete Antriebsorgan 3a stellvertretend für unterschiedliche Aggregate dienen soll. Weiterhin umfasst der Zugmitteltrieb 1a eine Spannvorrichtung 4, wobei ein Zugmittel 5 zumindest bereichsweise die Laufscheiben des Abtriebsorgans 2, des Antriebsorgans 3a sowie die Laufscheibe 6 der Spannvorrichtung 4 umschließt. Die Spannvorrichtung 4 umfasst einen dreieckförmig gestalteten Tragkörper 7, der um einen Drehpunkt 8 schwenkbar ist und an dem eine Laufscheibe 6 drehbar angeordnet ist. An einem Anlenkpunkt 9 des Tragkörpers 7 ist weiterhin ein als Hydraulikelement ausgebildetes Federelement 10 beweglich angelenkt. Das Federmittel 10 ist an dem vom Tragkörper 7 abgewandte Ende mit einem Stellhebel 11 a verbunden, der um einen Fixierpunkt 12 schwenkbar ist. An der vom Anlenkpunkt 13 für das Federmittel 11a abgewandten Endseite bildet der Stellhebel 11a Abstützflächen 14, 15. Von einer Längsachse 16, des Stellhebels 11a ausgehend, die den Fixierpunkt 12 mit dem Anlenkpunkt 13 verbindet verlaufen die Abstützflächen 14, 15 unter einem Winkel "α" bzw. "β" von < 90°. In der jeweiligen Endlage ist jede Abstützfläche 14, 15 einer Referenzfläche 18, 19 an einem Gehäuse 17 zugeordnet, wobei die Referenzflächen zueinander abgewinkelt sind und dabei einen Winkel "γ" einschließen.

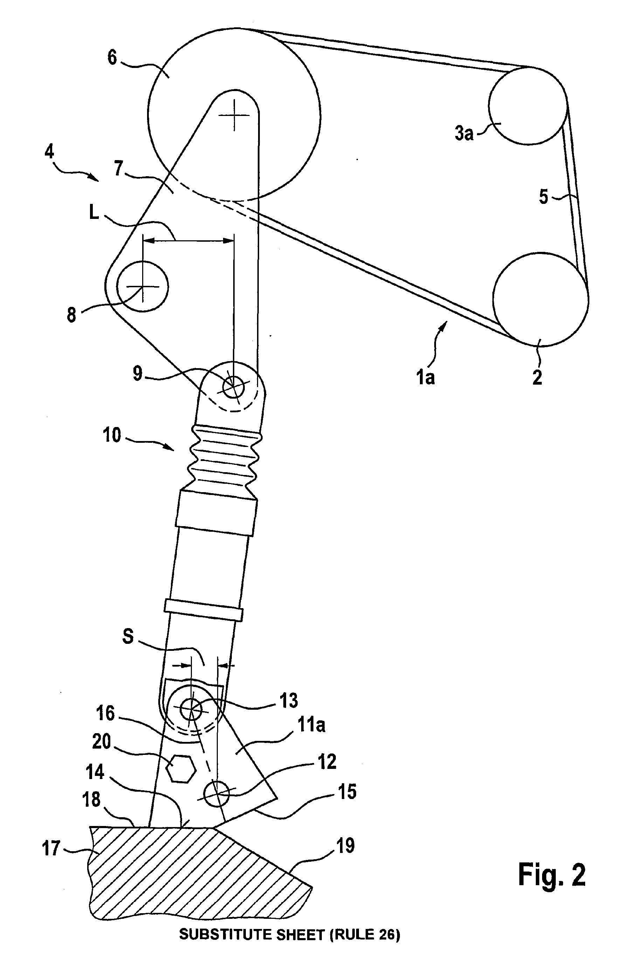

Die Gestaltung des Stellhebels 11a, die Anordnung der Abstützflächen 14, 15 in Verbindung mit den korrespondierenden Referenzflächen 18, 19 ermöglichen stabile Endlagen des Stellhebels 11a und damit der Spannvorrichtung 4. Zur einfachen Handhabung ist der Stellhebel 11a mit einem Mehrkantprofil 20 versehen, in das bzw. an dem ein Werkzeug angreifen kann, mit dem der Stellhebel 11a von der in Figur 1 dargestellten Montageposition in eine Betriebsposition gemäß Figur 2 schwenkbar ist. Neben der Ausbildung der Abstützflächen 14, 15 ist ein Radius "R" der sich zwischen dem Fixierpunkt 12 und dem Anlenkpunkt 13 einstellt, ein weiteres Auslegungskriterium zur Erzielung stabiler Endlagen. Dabei nimmt der Radius "R" gleichfalls Einfluß auf ein axiales Abstandsmaß "S" das sich im eingebauten Zustand des Stellhebels 11a sowohl in der Montageposition als auch in der Betriebsposition einstellt.

Ein Schwenkbereich der Spannvorrichtung 4 wird unmittelbar von der Gestaltung des als Kniehebel ausgebildeten Tragkörpers 7 beeinflußt. Ein Kriterium ist dabei ein Abstandsmaß zwischen dem Drehpunkt 8 und dem Anlenkpunkt 9 für das Federmittel 10, daß gleichzeitig ein axiales Abstandsmaß "L" zwischen dem Drehpunkt 8 und dem Anlenkpunkt 9 definiert. Gleichfalls wird der Schwenkbereich der Spannvorrichtung 4 und der damit in Verbindung stehenden Laufscheibe 6 durch den Radius "R" beeinflusst, der sich zwischen dem Drehpunkt 8 und der Drehachse der Laufrolle 6 einstellt.

Die Figur 2 zeigt die Spannvorrichtung 4 in der Betriebsstellung. Diese ist erzielbar, indem der Stellhebel 11a ausgehend von der Montageposition gemäß Figur 1 gegen den Uhrzeigersinn verschwenkt wird, bis die Abstützfläche 14 an der Referenzfläche 18 des Gehäuses 17 anliegt. Ein Vergleich dieser beiden Endlagen verdeutlicht die sich verändernden axialen Abstandsmaße "S" an dem Stellhebel 11a und dem Abstandsmaß "L" des Tragkörpers 7 der Spannvorrichtung 4. Die Wirkung des Stellhebels 11a verdeutlichend ist das Zugmittel 5 gestrafft und damit vorgespannt in Figur 2 dargestellt.

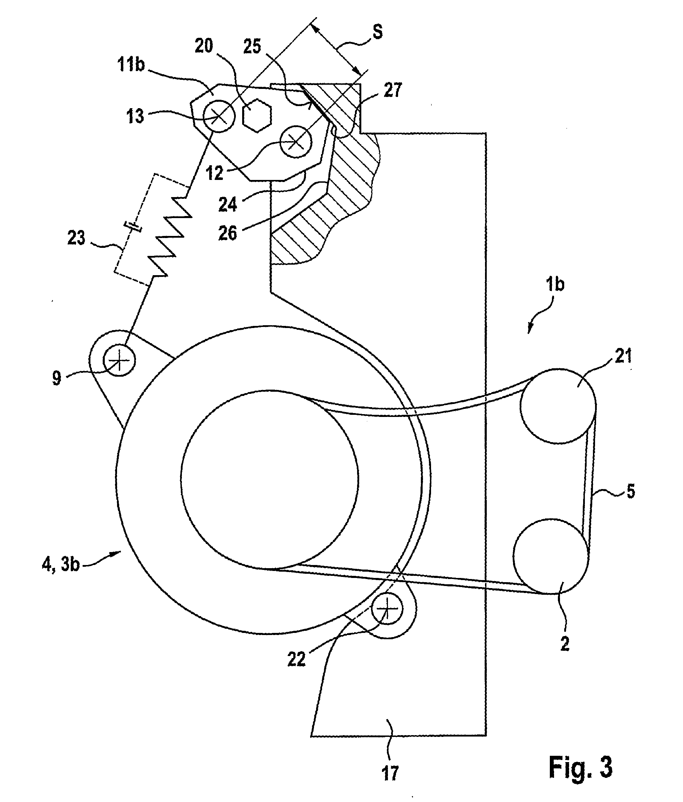

Die Figur 3 zeigt die Montageposition des Stellhebels 11 b in Verbindung eines schwenkbar angeordneten Aggregates, dem Antriebsorgan 3b, um die Montage des Zugmittels 5 zu vereinfachen. Das vorzugsweise einen Startergenerator darstellende Antriebsorgan 3b ist um einen Drehpunkt 22 schwenkbar und über das eine Feder- Dämpfereinheit bildende Federmittel 23 sowie dem Stellhebel 11 b an dem Gehäuse 17 abgestützt. Die Abstützflächen 24, 25 des Stellhebels 11 b sind dabei den Referenzflächen 26, 27 an dem Gehäuse 17 zugeordnet. Übereinstimmend mit dem Stellhebel 11a gemäß den Figuren 1 und 2 stellt sich durch die Gestaltung bzw. Anordnung des Fixierpunktes 12 in Verbindung mit dem Anlenkpunkt 13 für das Federmittels 23 ein Abstandsmaß "S" an den Stellhebel 11 b ein.

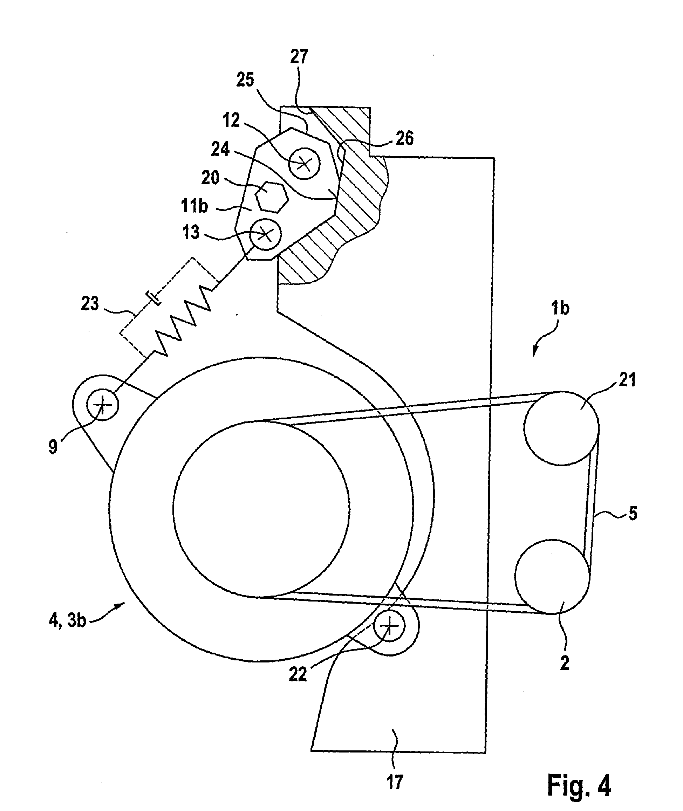

Die Figur 4 zeigt die Betriebsposition des Stellelementes 11 b, das durch eine Verdrehung im Gegenuhrzeigersinn in die Betriebsposition verschwenkt ist. Dabei stützt sich die Abstützfläche 24 kraftschlüssig an der Referenzfläche 26 des Gehäuses 17 ab.

### Bezugszahlenliste

- 1a: Zugmitteltrieb
- 1b: Zugmitteltrieb
- 2: Abtriebsorgan
- 3a: Antriebsorgan
- 3b: Antriebsorgan
- 4: Spannvorrichtung
- 5: Zugmittel
- 6: Laufscheibe
- 7: Tragkörper
- 8: Drehpunkt
- 9: Anlenkpunkt
- 10: Federmittel
- 11a: Stellhebel
- 11b: Stellhebel
- 12: Fixierpunkt
- 13: Anlenkpunkt
- 14: Abstützfläche
- 15: Abstützfläche
- 16: Längsachse
- 17: Gehäuse
- 18: Referenzfläche
- 19: Referenzfläche
- 20: Mehrkantprofil
- 21: Umlenkrolle
- 22: Drehpunkt
- 23: Federmittel
- 24: Abstützfläche
- 25: Abstützfläche
- 26: Referenzfläche
- 27: Referenzfläche

## Patentansprüche

1. Zugmitteltrieb, bestimmt zum Antrieb von zumindest einem Aggregat einer Verbrennungskraftmaschine, der ein Zugmittel (5) umfasst, das eine Laufscheibe eines Abtriebsorgans (2) und die Laufscheibe eines Antriebsorgans (3a) verbindet, wobei zur Erzielung einer ausreichenden Vorspannung des Zugmittels (5) eine Spannvorrichtung (4) vorgesehen ist, die um einen Drehpunkt (8) schwenkbar ist und mit einer Laufscheibe (6) an dem Zugmittel (5) geführt und über ein Federmittel (10) abgestützt ist, und wobei dem Federmittel (10) ein Stellhebel (11a) zugeordnet ist, der um einen zu dem Drehpunkt (8) der Spannvorrichtung (4) lagepositionierten Fixierpunkt (12) zwischen zwei Endlagen, von einer Montageposition in eine Betriebsposition verschwenkbar ist, **dadurch gekennzeichnet, daß** der Stellhebel (11a) zwei zueinander abgewinkelte Abstützflächen (14, 15) aufweist, die mit Referenzflächen (18 ,19) eines Gehäuses (17) der Verbrennungskraftmaschine definierte Endlagen des Stellhebels (11a) gewährleisten.

2. Zugmitteltrieb, bestimmt zum Antrieb von zumindest einem Aggregat einer Verbrennungskraftmaschine, der ein Zugmittel (5) umfasst, das eine Laufscheibe eines Abtriebsorgans (2) und die Laufscheibe zumindest eines Antriebsorgans (3b) verbindet, wobei das um einen Drehpunkt (22) schwenkbar angeordnete als Aggregat bezeichnete Antriebsorgan (3b) über ein Federmittel (10) abgestützt ist, und wobei dem Federmittel (23) ein Stellhebel (11 b) zugeordnet ist, der um einen zu dem Drehpunkt (22) des Antriebsorgans (3b) lagepositionierten Fixierpunkt (12) zwischen zwei Endlagen, von einer Montageposition, in eine Betriebsposition verschwenkbar ist, **dadurch gekennzeichnet, daß** der Stellhebel (11b) zwei zueinander abgewinkelte Abstützflächen (24, 25) aufweist, die mit Referenzflächen (26 ,27) eines Gehäuses (17) der Verbrennungskraftmaschine definierte Endlagen des Stellhebels (11b) gewährleisten.

3. Zugmittelantrieb nach Anspruch 1 oder nach Anspruch 2, wobei der Stellhebel (11a, 11b) ein Mehrkantprofil (20) für ein Werkzeug aufweist, mit dem der Stellhebel (11a, 11b) zwischen den Endlagen verstellbar ist.

4. Zugmittelantrieb nach Anspruch 1 oder nach Anspruch 2, bei dem der Stellhebel (11a, 11b) in der Betriebsposition mittels einer Sicherungsschraube lagepositioniert ist.

5. Zugmittelantrieb nach Anspruch 1 oder nach Anspruch 2, bei dem sich zwischen dem Fixierpunkt (12) des Stellhebels (11a, 11b) und einem Anlenkpunkt (13) des Federmittels (10, 23) an dem Stellhebel (11a, 11b) in der Einbaulage sowohl in einer Montageposition als auch in einer Betriebsposition ein axiales Abstandsmaß "s" einstellt.

6. Zugmittelantrieb nach Anspruch 1 oder nach Anspruch 2, wobei Neigungswinkel "α" und "β", die sich zwischen einer Längsachse (16) des Stellhebels (11a, 11b) und deren Abstützflächen (14, 15; 24, 25) einstellen, den Verstellbereich bzw. den Verstellwinkel des Stellhebels (11a, 11b) beeinflussen.

7. Zugmitteltrieb nach Anspruch 1, wobei die Spannvorrichtung (4) einen um den Drehpunkt (8) schwenkbaren Tragkörper (7) einschließt, an dem die drehbare, dem Zugmittel (5) zugeordnete Laufscheibe (6) positioniert ist.

8. Zugmittelantrieb nach Anspruch 7, wobei der Tragkörper (7) als ein dreieckförmig gestalteter Kniehebel ausgebildet ist.

9. Zugmittelantrieb nach Anspruch 8, bei dem jedem Eckpunkt des dreieckförmigen, als Kniehebel ausgebildeten Tragkörpers (7) eines der Bauteile wie, Laufscheibe (6), Federmittel (10) oder Drehpunkt (8) zugeordnet ist.

10. Zugmittelantrieb nach Anspruch 7, wobei in der Einbaulage der Spannvorrichtung (4), unabhängig von der Position der Spannvorrichtung (4), sich zwischen dem Drehpunkt (8) des Tragkörpers (7) und dem Anlenkpunkt (9) des Federmittels (10) ein axialer Versatz "L" einstellt.

11. Zugmittelantrieb nach Anspruch 2, dem ein schwenkbar gegen das Federmittel (23) abgestützter, als Antriebsorgan (3b) ausgebildeter Startergenerator gleichzeitig die Funktion einer Spannvorrichtung (4) des Zugmitteltrieb (1b) einnimmt.

12. Zugmittelantrieb nach Anspruch 1 oder nach Anspruch 2, wobei als Federmittel (10, 23) eine Feder - Dämpfereinheit vorgesehen ist.

13. Zugmittelantrieb nach Anspruch 1 oder nach Anspruch 2, der als Federmittel (10, 23) ein hydraulisches Federelement einschließt.

## Claims

1. Flexible drive, intended for driving at least one assembly of an internal combustion engine, which flexible drive comprises a drawing means (5) which connects a pulley of an output element (2) and the pulley of a drive element (3a), a tensioning apparatus (4) being provided in order to achieve a sufficient prestress of the drawing means (5), which tensioning apparatus (4) can be pivoted about a pivot point (8), is guided on the drawing means (5) by way of a pulley (6) and is supported via a spring means (10), and the spring means (10) being assigned an actuating lever (11a) which can be pivoted about a fixing point (12) which is positioned with respect to the pivot point (8) of the tensioning apparatus (4), between two end positions, from a mounting position into an operating position, **characterized in that** the actuating lever (11a) has two supporting faces (14, 15) which are angled away towards one another and, together with reference faces (18, 19) of a housing (17) of the internal combustion engine, ensure defined end positions of the actuating lever (11a).

2. Flexible drive, intended for driving at least one assembly of an internal combustion engine, which flexible drive comprises a drawing means (5) which connects a pulley of an output element (2) and the pulley of at least one drive element (3b), the drive element (3b) which is denoted as an assembly and is arranged such that it can be pivoted about a pivot point (22) being supported via a spring means (10), and the spring means (23) being assigned an actuating lever (11b) which can be pivoted about a fixing point (12) which is positioned with respect to the pivot point (22) of the drive element (3b), between two end positions, from a mounting position into an operating position, **characterized in that** the actuating lever (11b) has two supporting faces (24, 25) which are angled away towards one another and, together with reference faces (26, 27) of a housing (17) of the internal combustion engine, ensure defined end positions of the actuating lever (11b).

3. Flexible drive according to Claim 1 or according to Claim 2, the actuating lever (11a, 11b) having a polygonal profile (20) for a tool, by way of which the actuating lever (11a, 11b) can be adjusted between the end positions.

4. Flexible drive according to Claim 1 or according to Claim 2, in which the actuating lever (11a, 11b) is positioned in the operating position by means of a securing screw.

5. Flexible drive according to Claim 1 or according to Claim 2, in which an axial spacing dimension "s" is set between the fixing point (12) of the actuating lever (11a, 11b) and an articulation point (13) of the spring means (10, 23) on the actuating lever (11a, 11b) in the installation position, both in a mounting position and in an operating position.

6. Flexible drive according to Claim 1 or according to Claim 2, inclination angles "α" and "β" which are set between a longitudinal axis (16) of the actuating lever (11a, 11b) and its supporting faces (14, 15; 24, 25) influencing the adjusting range or the adjusting angle of the actuating lever (11a, 11b).

7. Flexible drive according to Claim 1, the tensioning apparatus (4) including a carrying element (7) which can be pivoted about the pivot point (8) and on which the rotatable pulley (6) is positioned which is assigned to the drawing means (5).

8. Flexible drive according to Claim 7, the carrying element (7) being configured as a toggle lever of triangular design.

9. Flexible drive according to Claim 8, in which each corner point of the triangular carrying element (7) which is configured as a toggle lever is assigned one of the components such as pulley (6), spring means (10) or pivot point (8).

10. Flexible drive according to Claim 7, an axial offset "L" being set between the pivot point (8) of the carrying element (7) and the articulation point (9) of the spring means (10) in the installation position of the tensioning apparatus (4), independently of the position of the tensioning apparatus (4).

11. Flexible drive according to Claim 2, in which a starter generator which is configured as a drive element (3b) and is supported pivotably against the spring means (23) at the same time assumes the function of a tensioning apparatus (4) of the flexible drive (1b).

12. Flexible drive according to Claim 1 or according to Claim 2, a spring/damper unit being provided as spring means (10, 23).

13. Flexible drive according to Claim 1 or according to Claim 2 which includes a hydraulic spring element as spring means (10, 23).

## Revendications

1. Entraînement par moyen de traction, prévu pour l'entraînement d'au moins une unité d'un moteur à combustion interne, qui comprend un moyen de traction (5) qui relie un disque mobile d'un organe de sortie (2) et le disque mobile d'un organe d'entraînement (3a), un dispositif de serrage (4) étant prévu pour obtenir une précontrainte suffisante du moyen de traction (5), lequel peut pivoter autour d'un centre de rotation (8) et est guidé par un disque mobile (6) sur le moyen de traction (5) et est supporté par le biais d'un moyen de ressort (10), et un levier de commande (11a) étant associé au moyen de ressort (10), lequel peut pivoter autour d'un point de fixation (12) positionné par rapport au point de rotation (8) du dispositif de serrage (4) entre deux positions d'extrémité, d'une position de montage dans une position fonctionnelle, **caractérisé en ce que** le levier de commande (11a) présente deux surfaces d'appui (14, 15) coudées l'une par rapport à l'autre, lesquelles garantissent, avec des surfaces de référence (18, 19) d'un boîtier (17) du moteur à combustion interne, des positions d'extrémité définies du levier de commande (11a).

2. Entraînement par moyen de traction, prévu pour l'entraînement d'au moins une unité d'un moteur à combustion interne, qui comprend un moyen de traction (5) qui relie un disque mobile d'un organe de sortie (2) et le disque mobile d'un organe d'entraînement (3a), l'organe d'entraînement (3b) désigné par unité, et disposé de manière à pouvoir pivoter autour d'un point de rotation (22) étant supporté par le biais d'un moyen de ressort (10), et un levier de commande (11b) étant associé au moyen de ressort (23), lequel peut pivoter autour d'un point de fixation (12) positionné par rapport au point de rotation (22) de l'organe d'entraînement (3b) entre deux positions d'extrémité, d'une position de montage dans une position fonctionnelle, **caractérisé en ce que** le levier de commande (11b) présente deux surfaces d'appui (24, 25) coudées l'une par rapport à l'autre, lesquelles garantissent, avec des surfaces de référence (26, 27) d'un boîtier (17) du moteur à combustion interne, des positions d'extrémité définies du levier de commande (11b).

3. Entraînement par moyen de traction selon la revendication 1 ou selon la revendication 2, dans lequel le levier de commande (11a, 11b) présente un profilé polygonal (20) pour un outil, avec lequel le levier de commande (11a, 11b) peut être déplacé entre les positions d'extrémité.

4. Entraînement par moyen de traction selon la revendication 1 ou selon la revendication 2, dans lequel le levier de commande (11a, 11b) est positionné dans la position fonctionnelle au moyen d'une vis de fixation.

5. Entraînement par moyen de traction selon la revendication 1 ou selon la revendication 2, dans lequel, une distance axiale "s" s'ajuste entre le point de fixation (12) du levier de commande (11a, 11b) et un point d'articulation (13) du moyen de ressort (10, 23) sur le levier de commande (11a, 11b) dans la position d'installation et dans une position de montage ainsi que dans une position fonctionnelle.

6. Entraînement par moyen de traction selon la revendication 1 ou la revendication 2, dans lequel les angles d'inclinaison "α" et "β", qui sont formés entre un axe longitudinal (16) du levier de commande (11a, 11b) et leurs surfaces d'appui (14, 15 ; 24, 25), influencent la plage de réglage ou l'angle de réglage du levier de commande (11a, 11b).

7. Entraînement par moyen de traction selon la revendication 1, dans lequel le dispositif de serrage (4) comprend un corps porteur (7) pouvant pivoter autour du centre de rotation (8), sur lequel est positionné le disque mobile (6) rotatif associé au moyen de traction (5).

8. Entraînement par moyen de traction selon la revendication 7, dans lequel le corps porteur (7) est réalisé sous la forme d'une genouillère de forme triangulaire.

9. Entraînement par moyen de traction selon la revendication 8, dans lequel à chaque coin du corps porteur (7) de forme triangulaire réalisé sous forme de genouillère, on associe l'un des composants comme le disque mobile (6), le moyen de ressort (10), ou le centre de rotation (8).

10. Entraînement par moyen de traction selon la revendication 7, dans lequel, dans la position d'installation du dispositif de serrage (4), indépendamment de la position du dispositif de serrage (4), se forme un décalage axial "L" entre le centre de rotation (8) du corps porteur (7) et le point d'articulation (9) du moyen de ressort (10).

11. Entraînement par moyen de traction selon la revendication 2, dans lequel un générateur-démarreur réalisé sous forme d'organe d'entraînement (3b) de manière pivotante et supporté contre le moyen de ressort (23) adopte simultanément la fonction d'un dispositif de serrage (4) de l'entraînement par moyen de traction (1b).

12. Entraînement par moyen de traction selon la revendication 1 ou selon la revendication 2, dans lequel on prévoit en tant que moyen de ressort (10, 23) une unité d'amortisseur à ressort.

13. Entraînement par moyen de traction selon la revendication 1 ou selon la revendication 2, qui comprend en tant que moyen de ressort (10, 23) un élément de ressort hydraulique.
